# EUROPÄISCHE PATENTSCHRIFT

(11) **EP 1 786 866 B1**
(45) Veröffentlichungstag und Bekanntmachung des Hinweises auf die Patenterteilung: **22.01.2014**
(21) Anmeldenummer: 05784548.9
(22) Anmeldetag: 29.08.2005
(51) Int. Cl.: C08L 33/00, C09D 133/00, C09J 133/00, C08L 55/00, C09D 155/00, C09J 155/00, C08L 51/00, C09D 151/00, C09J 151/00, C08G 59/40

(54) **POLYMERE HARZZUSAMMENSETZUNG**
POLYMER RESIN COMPOSITION
COMPOSITION DE RESINE POLYMERE

(30) Priorität: 10.09.2004 EP 04021553
(43) Veröffentlichungstag der Anmeldung: 23.05.2007
(73) Patentinhaber: Evonik Hanse GmbH, 21502 Geesthacht (DE)
(72) Erfinder: EGER, Christian, 21357 Bardowick (DE); SPRENGER, Stephan, 22113 Oststeinbek (DE)
(74) Vertreter: Glawe, Delfs, Moll
(86) Internationale Anmeldenummer: PCT/EP2005/009294
(87) Internationale Veröffentlichungsnummer: WO 2006/027139

(56) Entgegenhaltungen:
- EP-A1- 0 911 375
- EP-A1- 1 197 532
- CN-A- 1 291 625
- CN-A- 1 450 133
- US-A- 4 990 587
- US-A- 5 087 681
- US-A- 5 292 812
- US-A- 5 334 662
- US-B1- 6 287 992
- PATENT ABSTRACTS OF JAPAN Bd. 008, Nr. 156 (C-234), 19. Juli 1984 (1984-07-19) & JP 59 059719 A (OSAKA GAS KK), 5. April 1984 (1984-04-05)
- PATENT ABSTRACTS OF JAPAN Bd. 2003, Nr. 12, 5. Dezember 2003 (2003-12-05) & JP 2003 301161 A (SEKISUI CHEM CO LTD), 21. Oktober 2003 (2003-10-21)
- PATENT ABSTRACTS OF JAPAN Bd. 015, Nr. 353 (C-0865), 6. September 1991 (1991-09-06) & JP 03 137179 A (TOAGOSEI CHEM IND CO LTD), 11. Juni 1991 (1991-06-11)
- PATENT ABSTRACTS OF JAPAN Bd. 017, Nr. 266 (C-1062), 25. Mai 1993 (1993-05-25) & JP 05 005085 A (YOKOHAMA RUBBER CO LTD:THE), 14. Januar 1993 (1993-01-14)
- PATENT ABSTRACTS OF JAPAN Bd. 016, Nr. 470 (C-0990), 30. September 1992 (1992-09-30) & JP 04 168162 A (TATSUTA ELECTRIC WIRE & CABLE CO LTD), 16. Juni 1992 (1992-06-16)

## Beschreibung

Die Erfindung betrifft polymere Zusammensetzungen auf der Basis von ungesättigten Polyesterharzen und/oder Vinylesterharzen und/oder (Meth)acrylaten. Diese Harze werden im Stand der Technik umfangreich verwendet als Harzbestandteil von Verbundwerkstoffen, insbesondere Faserverbundwerkstoffen, für sogenannte Coatings (Beschichtungen), als Vergussmasse, beispielsweise für den Verguss von Elektronikbauteilen, sowie als Klebstoffe und Dentalmaterialien. Es ist aus offenkundiger Vorbenutzung bereits bekannt, solche Harze durch heterodispersen Einbau eines modifizierenden Copolymers (beispielsweise auf Basis eines carboxylgruppenhaltigen Butadienacrylnitrilkautschuks) zu modifizieren und Eigenschaften wie beispielsweise die Schlagzähigkeit zu verbessern.

Der Erfindung liegt die Aufgabe zugrunde, eine polymere Zusammensetzung der eingangs genannten Art zu schaffen, die gegenüber dem genannten Stand der Technik verbesserte Eigenschaften aufweist.

Die erfindungsgemäße polymere Zusammensetzung enthält folgende Bestandteile:
a) mindestens ein Harz ausgewählt aus der Gruppe bestehend aus Vinylesterharzen, ungesättigten Polyesterharzen, Acrylaten und Methacrylaten,
b) mindestens ein Copolymer mit gegenüber den Harzen reaktiven Gruppen und einer Glasübergangstemperatur Tg von -20° C oder weniger,
c) Nanoteilchen mit einer mittels Neutronenkleinwinkelstreuung (SANS) gemessenen mittleren Teilchengröße dₘₐₓ von 5 bis 40 nm.

Ungesättigte Polyesterharze (gemäß DIN 7728 auch als UP-Harze bezeichnet) sind beispielsweise in Ullmanns Encyclopedia of Industrial Chemistry, 6. Auflage, Band 28, Seite 65 ff. näher beschrieben. Für die Herstellung von Polyesterharzen werden zunächst mehrwertige ungesättigte Dicarbonsäuren, vorzugsweise Malein- und/oder Fumarsäure) mit Diolen verestert. Man erhält verhältnismäßig niedermolekulare lineare Polyester, die in den Kettenelementen reaktionsfähige C-C-Doppelbindungen enthalten. Dieses Harzvorprodukt kann nun durch Copolymerisation mit einer Vinylverbindung (in der Regel Styrol) zu einem hochmolekularen, dreidimensionalen Netzwerk polymerisiert werden. Als Vinylverbindung wird in aller Regel Styrol verwendet, das gleichzeitig Lösungsmittel für die linearen Polyestervorprodukte ist.

Vinylesterharze (auch als VE-Harze bezeichnet) werden erhalten, in dem man in einer Vorstufe ein lineares Epoxidoligomer herstellt, das endständig Acrylat oder Methacrylatgruppen und damit reaktionsfähige Doppelbindungen aufweist. Diese endständigen Verbindungen ermöglichen in einem zweiten Schritt die Vernetzung in Styrol als Lösungs- und Vernetzungsmittel. Die Vernetzungsdichte von VE-Harzen ist geringer als die von UP-Harzen, da die linearen Oligmomere der Vorstufe bei VE-Harzen lediglich endständige Doppelbindungen aufweisen, während bei UP-Harzen eine Doppelbindung in jeder Wiederholungseinheit des Oligomers vorhanden ist.

Als Säurekomponente der UP-Harze können auch Mischungen von gesättigten und ungesättigten bifunktionellen Carbonsäuren (bzw. deren Anhydride) verwendet werden. Beispielsweise können als gesättigte aromatische Säurekomponenten Adipin, Glutar, Phtal, Isophtal und Terephtalsäure sowie deren Derivate eingesetzt werden. Bevorzugte ungesättigte Säuren sind Maleinsäure (Anhydrid) und Fumarsäure sowie Dielsalderaddukte aus Maleinsäureanhydrid und Cylopentadien. Als Diole werden vorzugsweise Propylen, Dipropylen, Ethylen und Diethylenglycol verwendet, ferner 2,2-Dimethyl-1,3-Propandiol, 1,4-Butandiol, 2,2,4-Trimethyl, 1,3-Pentandiol oder Bisphenol A sowie Derivate wie beispielsweise der Diglycidylether des Tetrabrombisphenols A. Die zur Vernetzung der UP-Harze erforderlichen Copolymere können gleichzeitig Lösungsmittel für die Oligomere sein, bevorzugt wird Styrol verwendet. Andere geeignete Verbindungen sind beispielsweise α-Methylstyrol, Vinyltoluol, Methylmethacrylat und andere. Bifunktionelle Monomere wie Divinylbenzol oder Diallylphtalat können als zusätzliche Vernetzer zugesetzt werden. Andere Bestandteile wie Härter (Polymerisationsinitiatoren wie beispielsweise Peroxide), Beschleuniger, Pigmente, Weichmacher und dergleichen sind dem Fachmann geläufig.

Bei VE-Harzen weist das Grundgerüst des VE-Oligomers bevorzugt aromatische Glycidylether von Phenolen oder epoxidierten Novolaken auf. Endständig sind diese mit Acrylsäure oder Methacrylsäure verestert. Sie werden als Lösung in den vorstehend genannten Lösungsmitteln eingesetzt, die in der Regel gleichzeitig als vernetzende Copolymere fungieren können. Die Aushärtung und Verarbeitung von VE-Harzen ist denen von UP-Harzen analog.

Acrylate und Methacrylate (nachfolgend gemeinsam als Acrylate oder Polyacrylate bezeichnet) sind dem Fachmann geläufig und werden beispielsweise in Ullmann's Encyclopedia of Industrial Chemistry, 6. Auflage, Band 28, Seite 1 ff beschrieben. Die reaktiven Monomere der Polyacrylate sind insbesondere Ester der Acrylsäure oder Methacrylsäure, jedoch auch die Säuren selbst, sowie Acrylamide und Methacrylamide. Ester der Acrylsäure und Methacrylsäure sind bevorzugt. Die bevorzugten Ester sind lineare, verzweigte oder zyklische C₁-C₆-Alkyl-ester sowie heterozyklische und aromatische Ester. Bevorzugte Acrylester sind Methylmethacrylat (MMA), Tetrahydrofurfurylmethacrylat (THFMA), Cyclohexylmethacrylat (CHMA), Isobornylmethacrylat (IBMA), Benzylmethacrylat (BMA), Dicyclopentadienyloxyethylmethäcrylat (DCPOEMA), *t*-Butyl-methacrylat (*t*BMA), Isobornylacrylat (IBH), Dihydrodicyclopentadienylacrylat (DHDCPA), Tripropylenglycoldiacrylat (TPGDA), Alkox. Pentaerythritoltetraacrylat (PPTTA), Propox. Neopentylglycoldiacrylat (NPGPODA), Hydroxyethylmethacrylat (HEMA), Trimethylolpropanformalacrylat (CTFA), Hexandioldiacrylat (HDDA), Propox. Glycerintriacrylat (GPTA), Ethox. Trimethylolpropantriacrylat (TMPEOTA), Trimethylolpropantriacrylat (TMPTA), Hydroxyethylmethacrylat (HEMA), Hydroxypropylmethacrylat (HPMA), Butylurethanethylacrylat (BUEA), Trithylenglycoldimethacrylat (TRGDMA), Dipropylenglycoldiacrylat (DPGDA), Polyethylenglycol (600) Diacrylat (PEG(600)DA), Bisphenol-A Ethox. (8) Diacrylat (BPA8EPDA), Pentaerythritoltriacrylat (PETIA), Pentaerythritoltetraacrylat (PETTA), Ditrimethylolpropantetraacrylat (DiTMPTTA), und Dipentaerythritolhexacrylat (DPHA). Acrylate im Sinne der Erfindung sind auch Oligomere oder noch teilreaktive Acrylatpoylmere wie zum Beispiel Epoxyacrylate, Urethanacrylate, Melaminacrylate oder Oligomere von Polyacrylaten.

Das erfindungsgemäß vorgesehene Copolymer muss reaktive Gruppen besitzen, die mit Gruppen des Harzes reagieren können und so das Copolymer chemisch in das Harz binden. Die Bezeichnung Copolymer bedeutet in diesem Zusammenhang, dass das Polymer durch diese reaktiven Gruppen chemisch mit dem Harz reagieren kann. Dieses Copolymer mit reaktiven Gruppen kann strukturell ein Homo- oder Copolymer bzw. -oligomer sein. Das Copolymer weist eine Glasübergangstemperatur Tg von -20° C oder weniger auf. Es bildet in dem erfindungsgemäßen Polymer nach dessen Aushärtung sogenannte Kautschukdomänen, die diese genannte Glasübergangstemperatur besitzen. Bei den Kautschukdomänen handelt es sich um im wesentlichen nur das Copolymer enthaltende Phasen, die in das Harz eingelagert sind und eine Modifizierung der mechanischen Eigenschaften, insbesondere der Schlagzähigkeit, bewirken. Innerhalb dieser Kautschukdomänen können beispielsweise zwischen den Copolymermolekülen im wesentlichen lediglich van der Waals-Kräfte wirken, im Grenzbereich zur Harzmatrix erfolgt auf Grund der gegenüber dem Harz reaktiven Gruppen ein Einpenetrieren des Copolymers in die Harzmatrix. Die erfindungsgemäße polymere Zusammensetzung ist nach ihrer Aushärtung in einem Zustand, den man als Grenzfall zwischen einem echten Zweiphasensystem (Harzmatrix mit Kautschukdomänen) und einem interpenetrierenden Netzwerk ansehen kann.

Die mit der Harzmatrix reaktionsfähigen Gruppen des Copolymers gemäß Merkmal b) des Anspruchs 1 können insbesondere reaktionsfähige Doppelbindungen (beispielsweise Vinylgruppen oder Methacrylatgruppen), Epoxygruppen oder Carboxygruppen sein.

Ein weiterer Bestandteil der erfindungsgemäßen Zusammensetzung sind Nanoteilchen oder Nanopartikel mit einer mittleren Teilchengröße dₘₐₓ von 5 bis 40 nm. Als Verfahren zur Messung der mittleren Teilchengröße kommt die Neutronenkleinwinkelstreuung (SANS small angel neutron scattering) zur Anwendung. Dieses Messverfahren ist dem Fachmann geläufig und bedarf hier keiner näheren Erläuterung. Bei der SANS-Messung erhält man eine Teilchengröße-Verteilungskurve, bei der der Volumenanteil von Teilchen mit entsprechender Größe (Durchmesser) aufgetragen ist über dem Teilchendurchmesser. Als mittlere Teilchengröße wird der Peak einer solchen SANS-Verteilungskurve, also die größte Volumenfraktion mit Teilchen entsprechenden Durchmessers, definiert.

Die Erfindung beruht auf der Erkenntnis, dass die Modifizierung von Harzen mit Kautschukdomänen bildenden Copolymeren einerseits und Nanoteilchen oder -partikeln andererseits eine deutliche und unerwartete Verbesserung der mechanischen Eigenschaften einer ausgehärteten erfindungsgemäßen polymeren Zusammensetzung bewirkt. Man erhält nach der Vernetzung und Härtung Duroplaste mit erheblich verbesserter Bruch- und Schlagzähigkeit, wobei andere wichtige, für Duroplaste charakteristische Eigenschaften, wie Festigkeit, Wärmeformbeständigkeit und Chemikalienresistenz im wesentlichen unbeeinflusst erhalten bleiben. Für den Fachmann war nicht zu erwarten, dass die Kombination der Modifikation von Harzwerkstoffen mit Polymeren einerseits und Nanoteilchen andererseits eine synergistische Wirkung aufweist und eine deutliche Verbesserung der mechanischen Eigenschaften bewirkt.

Wenn im Rahmen der Erfindung von einer polymeren Zusammensetzung gesprochen wird, umfasst dieser Begriff sowohl die noch nicht vernetzte bzw. ausgehärtete Mischung der entsprechenden Bestandteile als auch einen daraus hergestellten duroplastischen Werkstoff. Bei den noch reaktionsfähigen Mischungen kann es sich sowohl um Einkomponentenmischungen handeln, die durch äußere Einflüsse zur Reaktion gebracht werden können als auch um Mehrkomponentengemische, bei denen nach einer Vermischung der Komponenten die Aushärtung zum duroplastischen Werkstoff einsetzt.

Die Glasübergangstemperatur T_{g} der Domänen (Kautschukdomänen des Copolymers) liegt bevorzugt bei maximal -30°C, weiter vorzugsweise -40, -50 bzw. -60°C. Vorzugsweise unterschreitet sie nicht -100°C. Die bevorzugte Glasübergangstemperatur hängt auch von der beabsichtigten Anwendung der erfindungsgemäßen polymeren Zusammensetzungen ab.

Der Anteil des Copolymers an der erfindungsgemäßen polymeren Zusammensetzung beträgt bevorzugt 2 bis 30 Gew.-%, vorzugsweise 4 bis 18 Gew.-%, weiter vorzugsweise 6 bis 12 Gew.-%. Die Copolymere sind in einigen Fällen nicht ohne weiteres mit dem Harz mischbar. Bei der Herstellung einer erfindungsgemäßen Zusammensetzung können daher zunächst durch chemische Umsetzung der Copolymere mit einem äquimolaren Anteil oder einem Überschuss Harz sogenannte Vorprodukte oder Prepolymere hergestellt werden. Diese Vorprodukte sind mit allen gängigen Harzen beliebig mischbar. Im Rahmen der Erfindung ist es also nicht erforderlich, dass das Copolymer beim Vermischen mit den übrigen Bestandteilen der polymeren Zusammensetzung noch reaktive Gruppen aufweisen kann. Vielmehr ist es möglich, diese reaktiven Gruppen bereits in einer Vorstufe mit einem Teil des Harzes abreagieren zu lassen, wobei dieser Harzanteil einen molaren Überschuss von reaktiven Gruppen gegenüber den reaktiven Gruppen des Copolymers aufweisen kann. Gegenstand der Erfindung ist somit eine polymere Zusammensetzung gemäß der Definition des Anspruchs 1 unabhängig davon, in welcher Reihenfolge diese Bestandteile zusammengegeben und gegebenenfalls reagieren gelassen werden und ob dies einstufig oder in mehreren aufeinanderfolgenden Verfahrensschritten erfolgt. Die üblichen Vorgehensweisen zur Herstellung einer Mischung mit den Bestandteilen gemäß den Merkmalen a) und b) des Anspruchs 1 seien kurz erläutert.

Die Modifikation des Vinylesterharzes mit dem Copolymer gemäß Merkmal b) kann schon während der Herstellung der später zu vernetzenden Oligomeren des Vinylesterharzes geschehen (Syntheseroute). Beispielsweise kann ein Carboxyfunktioneller Flüssigkautschuk wie das weiter unten erläuterte CTBN mit einem Epoxidharz im Überschuss umgesetzt und damit Epoxy-funktionalisiert werden. Das Reaktionsprodukt wird anschließend mit Acrylsäure bzw. Methacrylsäure weiter umgesetzt, so dass die in einem nachfolgenden Schritt auszuhärtenden Oligomere des Vinylesterharzes entstehen. Eine solche durch die sogenannte Syntheseroute hergestellte Mischung ist kommerziell erhältlich, beispielsweise unter den Bezeichnungen Dion® 9500 von der Firma Reichhold oder Derakane® 8084 von Dow Chemical.

Der zweiter Weg ist die sogenannte Additivroute, bei der das Harz gemäß Merkmal a) und das Copolymer gemäß Merkmal b) zunächst separat hergestellt und dann vermischt werden. Dabei kann als Copolymer beispielsweise ein carboxyterminierter Flüssigkautschuk (beispielsweise CTBN) entweder mit einem Diepoxid Epoxy-funktionalisiert oder mit einem Glycidylmethacrylat Vinyl-funktionalisiert werden (näheres siehe unten), die so mit reaktiven Gruppen funktionalisierten Flüssigkautschuke werden dann mit dem Vinylesterharz vermischt.

Diese sogenannte Additivroute eignet sich auch, wenn als Harze ungesättigte Polyesterharze sowie Acrylate verwendet werden.

Während der Härtung einer erfindungsgemäßen Zusammensetzung tritt dann eine Phasentrennung auf und es bilden sich in der Harzmatrix die bereits beschriebenen Kautschukdomänen aus, welche chemisch in die Matrix eingebunden sind.

Die Kautschukdomänen in der ausgehärteten Zusammensetzung besitzen vorzugsweise eine mittlere Größe bestimmt durch REM oder TEM von 0,05 bis 20 µm, weiter vorzugsweise 0,1 bis 10 µm, weiter vorzugsweise 0,2 bis 4 µm.

Beispiele für die Copolymere sind 1,3-Dienpolymere mit Carboxylgruppen und weiteren polaren ethylenisch ungesättigten Comönomeren. Als Dien kann dabei Butadien, Isopren oder Chloropren eingesetzt werden, bevorzugt ist Butadien. Beispiele für polare, ethylenische ungesättigte Comonomere sind Acrylsäure, Methacrylsäure, niedere Alkylester der Acryl- oder Methacrylsäure, beispielsweise deren Methyl- oder Ethylester, Amide der Acryl- oder Methacrylsäure, Fumarsäure, Itakonsäure, Maleinsäure oder deren niedere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere sind Carboxyl-terminierte Butadienacrylnitrilcopolymere (CTBN), die in flüssiger Form unter dem Handelsnamen Hycar von der Firma Noveon (früher B. F. Goodrich) angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13, 1300 X 31 oder 1300 X 47. CTBN-Derivate können ebenfalls verwendet werden. Beispielhaft genannt seien die mit CTBNX bezeichneten CTBN-Derivate, bei denen zusätzliche Säurefunktionen in der Kette vorhanden-sind. Kommerziell geeignete Copolymere sind beispielsweise CTBNX 1300 X 9 und CTBNX 1300 X 18.

Andere geeignete CTBN-Derivate sind an den Enden des linearen Oligomers mit Epoxygruppen oder Vinylgruppen funktionalisiert. Eine Epoxyfunktionalisierung lässt sich durch Reaktionen der endständigen Carboxylgruppen von CTBN mit multifunktionalen Epoxiden erreichen. Eine Vinylfunktionalisierung erreicht man durch eine Reaktion dieser Gruppen mit einem Glycidylacrylat oder Glycidylmethacrylat. Von der Firma Noveon sind diese Copolymere unter der Bezeichnung VTBNX (Vinyl-funktionalisiert) bzw. ETBN (Epoxy-funktionalisiert) erhältlich. Besonders geeignet sind VTBNX 1300 X 33, VTBNX 1300 X 43, ETBN 1300 X 40 und ETBN 1300 X 44.

Bei Verwendung von Polyacrylaten sind als Copolymere ebenfalls die genannten CTBN und CTBN-Derivate geeignet. Besonders bevorzugt sind die unter der Bezeichnung VTBNX erhältlichen Umsetzungsprodukte des CTBNX mit Glycidylmethacrylat.

Im Rahmen der Erfindung sind zur Aushärtung des Harzes bekannte und dem Fachmann geläufige Härtungssysteme vorgesehen.

In der Regel werden als Härter Peroxide und Beschleuniger verwendet. Bevorzugt sind Ketonperoxide wie beispielsweise Methylethylketonperoxid, Cumolhydroperoxid, Cyclohexanonperoxid oder Acetylacetonperoxid. Als Beschleuniger können beispielsweise Kobaltoktanoate oder Vanadiumoktanoate verwendet werden.

Andere Härtersysteme basieren auf Benzoylperoxiden in Kombination mit Aminen, insbesondere aromatischen und/oder tertiären Aminen. Wenn bei erhöhten Temperaturen (beispielsweise etwa 80° C ausgehärtet wird, kann unter Umständen auf den Zusatz von Beschleunigern verzichtet werden.

Der Anteil des Härters bezogen auf die Gesamtmenge von Harz und Härter kann bevorzugt zwischen 4 und 50 Gew.-% liegen.

Die Nanoteilchen sind bevorzugt ausgewählt aus der Gruppe bestehend aus Siliciumdioxiden, Carbonaten (beispielsweise Kreiden) und Montmorillonit. Besonders bevorzugt sind Siliciumdioxidnanoteilchen, wie sie in der WO-A-02/083776 offenbart sind. Die bevorzugen Siliciumdioxidnanoteilchen sind im wesentlichen kugelförmig und weisen keine oder allenfalls eine geringfügige Agglomeration und/oder Aggregation auf. Sie unterscheiden sich damit deutlich von durch Flammenpyrolyse gewonnenen Siliciumdioxidteilchen (pyrogene Kieselsäure), bei der die Elementarteilchen keine Kugelform aufweisen und zudem häufig aggregieren und/oder agglomerieren. Bevorzugt sind die Nanoteilchen oberflächenmodifiziert, um deren Agglomeration zu verhindern oder verringern und den Einbau in die Harzmatrix zu erleichtern. Bei Siliciumdioxiden ist eine bevorzugte Oberflächenmodifikation die Silanisierung mit geeigneten Silanen.

Die Silane können hydrolysierbare und nicht hydrolysierbare, gegebenenfalls funktionelle Gruppen aufweisen. Beispiele für hydrolysierbare Gruppen sind Halogen-, Alkoxy-, Alkenoxy-, Acylox-, Oximino- und Aminogruppen. Beispiele für funktionelle, nicht hydrolysierbare Gruppen sind Vinyl-, Aminopropyl-, Chlorpropyl-, Aminoethylaminopropyl-, Glycidyloxypropyl-, Mercaptopropyl- oder MethacryloxypropylGruppen. Beispiele für nicht hydrolisierbare, nicht funktionelle Gruppen sind einwertige C₁- bis C₈-Kohlenwasserstoffreste. Beispiele für erfindungsgemäß verwendbare Silane sind: γ-Aminopropyltrimethoxysilan, γ-Aminopropylmethyldiethoxysilan, γ-Amino-Propyldimethylmethoxysilan, Glycidyloxypropyltrimethoxysilan, Methacryloxypropyltrimethoxysilan, Chlorpropyltrimethoxysilan, Vinylmethyldimethöxysilan, Vinyltrispropenoxysilan, Vinyldimethylbutanoximsilan, Vinyltrisbutanonoximsilan, Trimethylchlorsilan, Vinyldimethylchlorsilan, Dimethylchlorsilan, Vinylmethylchlorsilan.

Die Silane werden bevorzugt in einer Konzentration von 40 bis 200 Mol-% und besonders bevorzugt von 60 bis 150 Mol-% bezogen auf die molare Menge Silanolgruppen auf der Oberfläche der Nanoteilchen eingesetzt.

Die mittlere Teilchengröße dₘₐₓ der Nanoteilchen liegt bevorzugt zwischen 6 und 100 nm, weiter vorzugsweise 6 und 40 nm, weiter vorzugsweise 8 und 30 nm, weiter vorzugsweise 10 und 25 nm. Die maximale Halbwertsbreite der Verteilungskurve der Teilchengröße der Nanoteilchen beträgt vorzugsweise maximal 1,5 dₘₐₓ, weiter vorzugsweise maximal 1,2 dₘₐₓ, weiter vorzugsweise maximal 0,75 dₘₐₓ. Die Halbwertsbreite der Verteilungskurve ist die Breite (in nm) der Verteilungskurve auf halber Höhe, also bei der Hälfte des Teilchenvolumenanteils bei dem Verteilungskurvenpeak dₘₐₓ oder (anders ausgedrückt) die Breite der Verteilungskurve auf halber Höhe der Y-Achse (relativ zur Höhe der Kurve bei dₘₐₓ).

Die Nanoteilchen können eine mono- oder multimodale Verteilungskurve aufweisen. Bei einer monomodalen Verteilungskurve weist diese lediglich ein Maximum auf. Eine multimodale Verteilungskurve weist zwei oder mehr Maxima auf, innerhalb des genannten Bereichs von 5 bis 150 nm gibt es also zwei oder mehr Maxima dₘₐₓ der Kurve. Unter den Nanoteilchen mit multimodalen Verteilungskurven sind Teilchen mit bi- oder trimodaler Verteilungskurve bevorzugt. Bei multimodalen Verteilungskurven wird die Breite der Halbwertskurve für jedes Maximum separat bestimmt.

Gegenstand der Erfindung sind ferner Verbundwerkstoffe, die erfindungsgemäße polymere Zusammensetzungen enthalten. Es handelt sich insbesondere um Faserverbundwerkstoffe wie Glasfaser- oder Kohlefaserverbundwerkstoffe. Die polymere Zusammensetzung der Erfindung ist in einem solchen Verbundwerkstoff das Imprägnierharz. Das Imprägnierharz ist das Matrixharz, in dem die Fasern oder Gewebe eingebettet sind, unabhängig von dem Einbettungsverfahren. Auf Grund der sehr geringen Teilchengröße der Nanoteilchen kann eine erfindungsgemäße polymere Zusammensetzung als Imprägnierharz problemlos auch in dichtgepackte Verstärkungsfasern, wie sie für hoch beanspruchte Verbundwerkstoffe vorgesehen sind, eindringen. Damit können sich die vorteilhaften mechanischen Eigenschaften der erfindungsgemäßen Zusammensetzung im gesamten Bauteil entfalten. Der Anteil der Nanoteilchen an der polymeren Zusammensetzung beträgt bevorzugt 3 bis 20 Gew.-%, weiter vorzugsweise 6 bis 10 Gew.-%. Erfindungsgemäße Verbundwerkstoffe können beispielsweise zur Herstellung von Leiterplatten, Strukturbauteilen für Fahrzeuge und Flugzeuge, Sportgeräte, Radarmasten, Windmühlenflügeln oder dergleichen verwendet werden.

Gegenstand der Erfindung sind ferner Vergussmassen, die eine erfindungsgemäße polymere Zusammensetzung enthalten. Vergussmässen werden in der Elektro- und Elektronikindustrie als Elektroisolierharze beispielsweise beim Verguss von Spulen oder Transformatoren verwendet oder als sogenannter Die-Attach-Klebstoff zum Verkleben von Bauteilen auf Leiterplatten eingesetzt. Beim Verguss von Spulen kommt es darauf an, dass die Vergussmasse (das Imprägnierharz) möglichst leicht und fehlerfrei durch die oft nur wenige µm großen Abstände der Spulenwicklungen fließen kann. Dies ist bei den nanogefüllten polymeren Zusammensetzungen der Erfindung problemlos möglich. Der Anteil der Nanoteilchen an der polymeren Zusammensetzung beträgt bevorzugt 10 bis 50 Gew.-%, weiter vorzugsweise 20 bis 50 Gew.-%.

Gegenstand der Erfindung ist auch die Verwendung einer erfindungsgemäßen polymeren Zusammensetzung zur Herstellung eines Produktes ausgewählt aus der Gruppe bestehend aus Verbundwerkstoffen, Coatings, Vergussmassen, Klebstoffen und Dentalmaterialien.

Die Erfindung wird nachfolgend anhand von Beispielen erläutert. Sämtliche Prozent- und Anteilsangaben sind Gew.-% bzw. Gewichtsteile.

### Beispiel 1

### Herstellung der Nanoteilchen

Eine handelsübliche wässrige Alkalisilicatlösung mit einem Wassergehalt von 47 % und einem Verhältnis von SiO₂ zu Na₂O von 2,4 wird mit demineralisiertem Wasser auf einen Wassergehalt von 97 % verdünnt. 100 Teile dieser verdünnten Lösung werde mit einer Rate von 20 Teilen pro h durch eine mit einem handelsüblichen sauren Ionenaustauscher gefüllte Säule geleitet und danach einer Destillationsvorlage zugeführt. In der Destillationsvorlage wird die zulaufende deionisierte Silicatlösung bei Siedetemperatur gehalten und das abdestillierte Wasser wird aus der Lösung entfernt. Nach Ende des Zulaufes wird das gebildete Kieselsäuresol durch weiteres Erhitzen auf 10 Teile eingeengt. Der pH-Wert wird auf 10,5 bis 11 eingestellt.

Jeweils hundert Teile des so hergestellten Sols werden mit 2,5 Teilen Trimethylmethoxylsilan versetzt und gerührt. Zu diesen Mischungen werden 2000 Teile Isopropanol gegeben und das Wasser durch atmosphärische Destillation bis auf eine nach der Karl-Fischer-Methode bestimmten Gehalt von < 0,1 % entfernt. Bei dieser Destillation werden etwa 1900 Teile Isopropanol entfernt.

Die Teilchengrößenverteilung wird mittels SANS gemessen und ergab eine mittlere Teilchengröße von 23,2 nm, die Halbwertsbreite der Verteilungskurve betrug 11 nm.

### Vergleichsbeispiel

Als Vormischung mit den Bestandteilen gemäß den Merkmalen a) und b) des Anspruchs 1 wird Dion® 9500 der Firma Reichhold eingesetzt. Es handelt sich um ein Epoxy-basiertes Vinylesterharz, das mit einem CTBN als Copolymer modifiziert ist. Der Styrolgehalt des im Handel erhältlichen Vorproduktes liegt bei etwa 40 Gew.-%. Dieses Harz wurde gemäß diesem Vergleichsbeispiel alleine, also ohne Nanopartikel, zu einem Formkörper ausgehärtet. Als Härtersystem wurden 4 Gew.-% Benzoylperoxidhärter (BP-50-FT der Firma Peroxidchemie) sowie 2 Gew.-% Aminbeschleuniger auf Basis Dimethylanilin (A-305 der Firma Peroxidchemie) zugesetzt, es wurde 24 h bei Raumtemperatur ausgehärtet.

### Beispiel 2

90 Teile Dion® 9500 werden in einem Reaktor mit 20 Teilen Nanopartikeldispersion gemäß Beispiel 1 vermischt. Das in der Nanopartikeldispersion enthaltene Insopropanol wird durch fraktionierte Destillation unter vermindertem Druck entfernt. Das mit 10 % Nanopartikel gefüllte Harz wird zu einem Formkörper ausgehärtet, wie im Vergleichsbeispiel angegeben.

### Beispiel 3

80 Teile Dion® 9500 werden in einem Reaktor mit 40 Teilen Nanopartikeldispersion gemäß Beispiel 1 vermischt, anschließend wird weiterverfahren, wie in Beispiel 2 angegeben.

Biegefestigkeit, Biegemodul (DIN EN ISO 178) und Glasübergangstemperatur (DSC Differential Scanning Calorimetry) der erhaltenen Formkörper wurden wie folgt gemessen:

| | Biegefestigkeit (MPa) | Biegemodul (Gpa) | Tg (°C) |
|---|---|---|---|
| Vergleichsbeispiel | 52,0 | 793 | 104 |
| Beispiel 2 | 78,5 | 1652 | 105 |
| Beispiel 3 | 82,8 | 1785 | 106 |

## Patentansprüche

1. Polymere Zusammensetzung, die enthält:
a) mindestens ein Harz ausgewählt aus der Gruppe bestehend aus Vinylesterharzen, ungesättigten Polyesterharzen, Acrylaten und Methacrylaten,
b) mindestens ein Copolymer mit gegenüber Harzen reaktiven Gruppen und einer Glasübergangstemperatur T_{g} von -20° C oder weniger,
c) Nanoteilchen mit einer mittels Neutronenkleinwinkelstreuung (SANS) gemessenen mittleren Teilchengröße dₘₐₓ von 5 bis 40 nm.

2. Zusammensetzung nach Anspruch 1, **dadurch gekennzeichnet, dass** die Glasübergangstemperatur Tg des Copolymers -20 bis -100°C, vorzugsweise -30 bis -100°C, weiter vorzugsweise -40 bis -100°C, weiter vorzugsweise -50 bis -100°C, weiter vorzugsweise -60 bis -100°C beträgt.

3. Zusammensetzung nach Anspruch 1 oder 2, **dadurch gekennzeichnet, dass** der Anteil des Copolymers an der Zusammensetzung 2 bis 30 Gew.-%, vorzugsweise 4 bis 18 Gew.-%, weiter vorzugsweise 6 - 12 Gew.-% beträgt.

4. Zusammensetzung nach einem der Ansprüche 1 bis 3, **dadurch gekennzeichnet, dass** das Copolymer in der ausgehärteten Zusammensetzung Kautschukdomänen mit einer mittleren Größe von 0,05 bis 20 µm, vorzugsweise 0,1 bis 10 µm, weiter vorzugsweise 0,2 bis 4 µm bildet.

5. Zusammensetzung nach einem der Ansprüche 1 bis 4, **dadurch gekennzeichnet, dass** das Copolymer ein Carboxyterminiertes Butadienacrylnitril (CTBN) oder ein CTBN-Derivat ist.

6. Zusammensetzung nach Anspruch 5, **dadurch gekennzeichnet, dass** die CTBN-Derivate ausgewählt sind aus der Gruppe bestehend aus Epoxy-terminierten und Vinylterminierten CTBN-Derivaten.

7. Zusammensetzung nach einem der Ansprüche 1 bis 6, **dadurch gekennzeichnet, dass** die Nanoteilchen ausgewählt sind aus der Gruppe bestehend aus Siliciumdioxiden, Carbonaten und Montmorillonit.

8. Zusammensetzung nach einem der Ansprüche 1 bis 7, **dadurch gekennzeichnet, dass** die mittlere Teilchengröße dₘₐₓ der Nanoteilchen zwischen 6 und 40 nm, weiter vorzugsweise 8 und 30 nm, weiter vorzugsweise 10 und 25 nm liegt.

9. Zusammensetzung nach einem der Ansprüche 1 bis 8, **dadurch gekennzeichnet, dass** die maximale Halbwertsbreite der Verteilungskurve der Teilchengröße der Nanoteilchen maximal 1,5 dₘₐₓ, vorzugsweise maximal 1,2 dₘₐₓ, weiter vorzugsweise maximal 0,75 dₘₐₓ beträgt.

10. Zusammensetzung nach einem der Ansprüche 1 bis 9, **dadurch gekennzeichnet, dass** die Nanoteilchen eine mono- oder multimodale Verteilungskurve aufweisen.

11. Zusammensetzung nach Anspruch 10, **dadurch gekennzeichnet, dass** die Verteilungskurve mono-, bi- oder trimodal ist.

12. Verbundwerkstoff, **dadurch gekennzeichnet, daß** er eine polymere Zusammensetzung nach einem der Ansprüche 1 bis 11 enthält.

13. Verbundwerkstoff nach Anspruch 12, **dadurch gekennzeichnet, dass** der Anteil der Nanoteilchen an der polymeren Zusammensetzung 3 bis 20 Gew.-%, vorzugsweise 6 bis 10 Gew.-% beträgt.

14. Coating, **dadurch gekennzeichnet, dass** es eine polymere Zusammensetzung nach einem der Ansprüche 1 bis 11 enthält.

15. Coating nach Anspruch 14, **dadurch gekennzeichnet, dass** der Anteil der Nanoteilchen an der polymeren Zusammensetzung 10 bis 50 Gew.-%, vorzugsweise 20 bis 50 Gew.-% beträgt.

16. Vergussmasse, **dadurch gekennzeichnet, dass** sie eine polymere Zusammensetzung nach einem der Ansprüche 1 bis 11 enthält.

17. Vergussmasse nach Anspruch 16, **dadurch gekennzeichnet, dass** der Anteil der Nanoteilchen an der polymeren Zusammensetzung 10 bis 50 Gew.-%, vorzugsweise 20 bis 50 Gew.-% beträgt.

18. Verwendung einer polymeren Zusammensetzung nach einem der Ansprüche 1 bis 11 zur Herstellung eines Produktes ausgewählt aus der Gruppe bestehend aus Verbundwerkstoffen, Coatings, Vergussmassen, Klebstoffen und Dentalmaterialien.

## Claims

1. Polymeric composition comprising:
a) at least one resin selected from the group consisting of vinyl ester resins, unsaturated polyester resins, acrylates and methacrylates,
b) at least one copolymer having resin-reactive groups and a glass transition temperature T_{g} of -20°C or less,
c) nanoparticles having an average particle size dₘₐₓ as measured by means of small-angle neutron scattering (SANS) of 5 to 40 nm.

2. Composition according to Claim 1, **characterized in that** the glass transition temperature T_{g} of the copolymer is -20 to -100°C, preferably -30 to -100°C, more preferably -40 to -100°C, more preferably -50 to -100°C, more preferably -60 to -100°C.

3. Composition according to Claim 1 or 2, **characterized in that** the fraction of the copolymer in the composition is 2% to 30% by weight, preferably 4% to 18% by weight, more preferably 6%-12% by weight.

4. Composition according to any one of Claims 1 to 3, **characterized in that** the copolymer in the cured composition forms rubber domains having an average size of 0.05 to 20 µm, preferably 0.1 to 10 µm, more preferably 0.2 to 4 µm.

5. Composition according to any one of Claims 1 to 4, **characterized in that** the copolymer is a carboxyterminated butadiene-acrylonitrile (CTBN) or a CTBN derivative.

6. Composition according to Claim 5, **characterized in that** the CTBN derivatives are selected from the group consisting of epoxy-terminated and vinylterminated CTBN derivatives.

7. Composition according to any one of Claims 1 to 6, **characterized in that** the nanoparticles are selected from the group consisting of silicon dioxides, carbonates and montmorillonite.

8. Composition according to any one of Claims 1 to 7, **characterized in that** the average particle size dₘₐₓ of the nanoparticles is between 6 and 40 nm, more preferably 8 and 30 nm, more preferably 10 and 25 nm.

9. Composition according to any one of Claims 1 to 8, **characterized in that** the maximum width at half peak height of the distribution curve of the particle size of the nanoparticles is not more than 1.5 dₘₐₓ, preferably not more than 1.2 dₘₐₓ, more preferably not more than 0.75 dₘₐₓ.

10. Composition according to any one of Claims 1 to 9, **characterized in that** the nanoparticles have a monomodal or multimodal distribution curve.

11. Composition according to Claim 10, **characterized in that** the distribution curve is monomodal, bimodal or trimodal.

12. Composite material **characterized in that** it comprises a polymeric composition according to any one of Claims 1 to 11.

13. Composite material according to Claim 12, **characterized in that** the fraction of the nanoparticles in the polymeric composition is 3% to 20% by weight, preferably 6% to 10% by weight.

14. Coating **characterized in that** it comprises a polymeric composition according to any one of Claims 1 to 11.

15. Coating according to Claim 14, **characterized in that** the fraction of the nanoparticles in the polymeric composition is 10% to 50% by weight, preferably 20% to 50% by weight.

16. Casting compound **characterized in that** it comprises a polymeric composition according to any one of Claims 1 to 11.

17. Casting composition according to Claim 16, **characterized in that** the fraction of the nanoparticles in the polymeric composition is 10% to 50% by weight, preferably 20% to 50% by weight.

18. Use of a polymeric composition according to any one of Claims 1 to 11 for producing a product selected from the group consisting of composite materials, coatings, casting compositions, adhesives, and dental materials.

## Revendications

1. Composition polymère, qui contient :
a) au moins une résine choisie dans le groupe constitué par les résines d'ester de vinyle, les résines de polyester insaturées, les acrylates et les méthacrylates,
b) au moins un copolymère contenant des groupes réactifs avec les résines et présentant une température de transition vitreuse Tg de -20 °C ou moins,
c) des nanoparticules présentant une taille de particule moyenne dₘₐₓ mesurée par diffusion de neutrons aux petits angles (DNPA) de 5 à 40 nm.

2. Composition selon la revendication 1, **caractérisée en ce que** la température de transition vitreuse Tg du copolymère est de -20 à -100 °C, de préférence de -30 à -100 °C, de manière davantage préférée de -40 à -100 °C, de manière davantage préférée de -50 à-100 °C, de manière davantage préférée de -60 à -100 °C.

3. Composition selon la revendication 1 ou 2, **caractérisée en ce que** la proportion du copolymère dans la composition est de 2 à 30 % en poids, de préférence de 4 à 18 % en poids, de manière davantage préférée de 6 à 12 % en poids.

4. Composition selon l'une quelconque des revendications 1 à 3, **caractérisée en ce que** le copolymère forme dans la composition durcie des domaines caoutchoutiques d'une taille moyenne de 0,05 à 20 µm, de préférence de 0,1 à 10 µm, de manière davantage préférée de 0,2 à 4 µm.

5. Composition selon l'une quelconque des revendications 1 à 4, **caractérisée en ce que** le copolymère est un butadiène-acrylonitrile à terminaison carboxy (CTBN) ou un dérivé de CTBN.

6. Composition selon la revendication 5, **caractérisée en ce que** les dérivés de CTBN sont choisis dans le groupe constitué par les dérivés de CTBN à terminaison époxy et à terminaison vinyle.

7. Composition selon l'une quelconque des revendications 1 à 6, **caractérisée en ce que** les nanoparticules sont choisies dans le groupe constitué par les dioxydes de silicium, les carbonates et la montmorillonite.

8. Composition selon l'une quelconque des revendications 1 à 7, **caractérisée en ce que** la taille de particule moyenne dₘₐₓ des nanoparticules est située entre 6 et 40 nm, de manière davantage préférée entre 8 et 30 nm, de manière davantage préférée entre 10 et 25 nm.

9. Composition selon l'une quelconque des revendications 1 à 8, **caractérisée en ce que** la largeur à mi-hauteur maximale de la courbe de distribution des tailles de particule des nanoparticules est d'au plus 1,5 dₘₐₓ, de préférence d'au plus 1,2 dₘₐₓ, de manière davantage préférée d'au plus 0,75 dₘₐₓ.

10. Composition selon l'une quelconque des revendications 1 à 9, **caractérisée en ce que** les nanoparticules présentent une courbe de distribution mono- ou multimodale.

11. Composition selon la revendication 10, **caractérisée en ce que** la courbe de distribution est mono-, bi- ou trimodale.

12. Matériau composite, **caractérisé en ce qu'**il contient une composition polymère selon l'une quelconque des revendications 1 à 11.

13. Matériau composite selon la revendication 12, **caractérisé en ce que** la proportion des nanoparticules dans la composition polymère est de 3 à 20 % en poids, de préférence de 6 à 10 % en poids.

14. Revêtement, **caractérisé en ce qu'**il contient une composition polymère selon l'une quelconque des revendications 1 à 11.

15. Revêtement selon la revendication 14, **caractérisé en ce que** la proportion des nanoparticules dans la composition polymère est de 10 à 50 % en poids, de préférence de 20 à 50 % en poids.

16. Masse de scellement, **caractérisée en ce qu'**elle contient une composition polymère selon l'une quelconque des revendications 1 à 11.

17. Masse de scellement selon la revendication 16, **caractérisée en ce que** la proportion des nanoparticules dans la composition polymère est de 10 à 50 % en poids, de préférence de 20 à 50 % en poids.

18. Utilisation d'une composition polymère selon l'une quelconque des revendications 1 à 11 pour la fabrication d'un produit choisi dans le groupe constitué par les matériaux composites, les revêtements, les masses de scellement, les adhésifs et les matériaux dentaires.
